# EUROPÄISCHE PATENTSCHRIFT

(11) **EP 1 802 377 B1**
(45) Veröffentlichungstag und Bekanntmachung des Hinweises auf die Patenterteilung: **09.11.2011**
(21) Anmeldenummer: 05784236.1
(22) Anmeldetag: 02.09.2005
(51) Int. Cl.: A62D 3/00, C09K 3/00

(54) **VERBESSERTE ENTGIFTUNGSLÖSUNG**
IMPROVED DETOXICANT SOLUTION
SOLUTION DE DECONTAMINATION AMELIOREE

(30) Priorität: 13.09.2004 DE 102004044621
(43) Veröffentlichungstag der Anmeldung: 04.07.2007
(73) Patentinhaber: OWR AG, 74834 Elztal-Rittersbach (DE)
(72) Erfinder: HOFFMANN, Klaus, 55543 Bad Kreuznach (DE)
(74) Vertreter: Kesselhut, Wolf
(86) Internationale Anmeldenummer: PCT/EP2005/009445
(87) Internationale Veröffentlichungsnummer: WO 2006/029724

(56) Entgegenhaltungen:
- EP-A- 0 443 739
- DD-A- 301 726
- DE-A1- 4 301 639
- DE-A1- 4 420 360
- US-A- 5 336 329
- US-A- 5 736 032

## Beschreibung

Die vorliegende Erfindung betrifft eine verbesserte Entgiftungslösung, enthaltend 0,1 bis 50 Gewichtsteile mindestens eines Friedel-Crafts Reagens (Lewis-Säuren) (I),

0,5 bis 80 Gewichtsteile eines oder mehrerer der folgenden, speziellen Lösungsmittel (II) : Dimethylsulfoxid, 1,3 - Dimethyl-2-imidazolidinon oder Octamethylcyclotetrasiloxan sowie 1 bis 80 Gewichtsteile eines alkoholischen Lösungsmittels (III), wobei sich die Bezeichnung Gewichtsteile jeweils auf 100 Gewichtsteile der gesamten Entgiftungslösung bezieht.

Weiterhin betrifft die vorliegende Erfindung ein Verfahren zur Herstellung der erfindungsgemäßen Entgiftungslösung, ein Verfahren zur Entgiftung von mit chemischen und/oder biologischen Kampfstoffen kontaminierten Oberflächen sowie die Verwendung der erfindungsgemäßen Entgiftungslösung zur Dekontaminierung von mit chemischen und/oder biologischen Kampfstoffen verunreinigten Oberflächen.

Chemische und biologische Kampfstoffe zählen nach wie vor zum Waffenarsenal zahlreicher Staaten. Darüber hinaus ist es durchaus denkbar, dass terroristische Gruppen sich derartiger Waffen bedienen, wobei diese einerseits auf Grund ihrer extrem hohen Toxizität katastrophale Wirkungen, insbesondere für die Zivilbevölkerung, verursachen können, und andererseits im Vergleich zu Kernwaffen weniger schwer zugänglich sind.

Es ist bekannt, dass chemische Kampfstoffe u.a. das zentrale Nervensystem massiv schädigen können und so zu schweren Verletzungen und oft auch zum Tode führen können. Zu den gefährlichsten chemischen Kampfstoffen zählen dabei insbesondere Organophosphorverbindungen, wie zum Beispiel Tabun, Soman, Sarin und VX, sowie der blasenziehende Hautkampfstoff Senfgas (Mustard).

Neben diesen chemischen Kampfstoffen existieren zahlreiche hochgiftige biologische Waffen, u.a. verschiedene Toxine auf Basis von Proteinen, sowie Bakterien oder Viren, die u.a Lebensmittelvergiftungen, Schädigungen des zentralen Nervensystems, Entzündungen, Milzbrand, Lungenpest, Ebola oder Pocken hervorrufen können.

Die beschriebenen chemischen Kampfstoffe werden üblicherweise vor ihrer eigentlichen Ausbringung mit sogen. Verdickungsmitteln vermengt, um deren Haftungsvermögen zu verbessern und ihre Entgiftung zu erschweren. Derartige Verdickungsmittel werden dabei auch als Haftklebstoffe bezeichnet, die ihre Klebrigkeit sehr lange behalten und dadurch, dass sie an Oberflächen, Kleidung und an der menschlichen Haut gut haften, die Wirksamkeit der mit ihnen verbundenen Kampfstoffe wesentlich erhöhen.

Seit Beginn des Einsatzes von chemischen und biologischen Kampfstoffen wird versucht, diese Substanzen durch Entgiftungsmittel unschädlich zu machen, wobei es sich von selbst versteht, dass die zur Entgiftung verwendeten Substanzen für den Menschen und die Umwelt so ungefährlich wie möglich sein sollen. Die früher eingesetzten stark oxidierenden oder hydrolysierenden Substanzen zeigen zwar in ihrer Fähigkeit zur Zerstörung chemischer Kampfstoffe eine hohe Wirkung, weisen aber dabei den Nachteil auf, dass sie für Menschen häufig selbst toxisch sind. Darüber hinaus sind sie meist stark korrosiv gegenüber mit Kampfstoffen kontaminierten Metalloberflächen.

Weitere entgiftende Substanzen basieren u.a. auf einer Lösung von 70%-igem Diethylentriamin, 28 % Methylcellosolve und 2 % Natriumhydroxid. Derartige Lösungen sind gegenüber den meisten Metallen nicht korrosiv, aber für den Menschen toxisch.

Aus der US-A 3,714,349 ist eine nichttoxische und nicht korrosive Dekontaminationslösung bekannt, die auf der Basis von 50 bis 70 Volumen-% Monoethanolamin, 30 bis 50 Volumen-% Glykol, 5 bis 10 Volumen-% einer nichttoxischen Chlorverbindung, insbesondere Chloramin-T, sowie 0,5 bis 1,0 Gew.-%, bezogen auf die Summe der anderen Komponenten von Histidin wirksam ist. Nachteilig an der darin beschriebenen Lösung ist indes, dass diese nicht in der Lage ist, die üblicherweise den eigentlichen Kampfstoffen beigemengten Verdickungsmittel aufzulösen, so dass die Kampfstoffe von den sie umhüllenden Verdickungsmitteln wirksam gegen eine rasche Entgiftung geschützt sind.

Gegenstand der US-A 3,634,278 ist eine Entgiftungslösung für chemische und biologische Kampfstoffe, die als wesentliche Komponenten eine binäre Mischung von Monoethanolamin und Lösungsmitteln wie Hexylenglykol, Monoisopropanolamin, Propylenglykolmonomethylether oder Dipropylenglykolmonomethylether enthält und mit einer Lithiumverbindung umgesetzt wird. Das daraus resultierende Lithiummonoethanolamin dient zur Entgiftung von Kampfstoffen. Die beschriebene Entgiftungslösung weist aber ebenfalls den Nachteil auf, dass sie nicht in der Lage ist, die schützende Wirkung von Verdickungsmitteln zu beseitigen, so dass das Entgiftungsmittel die Kampfstoffe - wenn überhaupt - nur sehr stark verzögert angreifen kann.

In der DD 301 726 A9 ist eine weitere nichttoxische Lösung zur Entgiftung von chemischen Kampfstoffen und Pflanzenschutzmitteln beschrieben, die auf einem aliphatischen Aminoalkohol, einem Alkohol und einem Alkalimetall basiert. Neben dieser Mischung aus vorzugsweise 40% 2-Aminoethanol, 16,5% Butanol und 3,5% Natrium enthält die Entgiftungslösung weiterhin ein stark polares nucleophiles Lösungsmittel, insbesondere 30% Dimethylsulfoxid sowie ein Cosolvens, insbesondere 10% Ethylenglykolmonobutylether.

Darüber hinaus ist aus der DE 44 20 360 A1 ein Verfahren bekannt, mit welchem arsenorganische Kampfstoffe bei niedrigen Temperaturen in chemisch weiter aufarbeitbare Reaktionsprodukte überführbar sind, wobei hierzu Lewissäuren insbesondere Aliuminiumtrichlorid, oder Metallseifen höherer Fettsäuren als Katalysator verwendet werden. Zur Entgiftung wird der arsenorganische Kampfstoff in einem inerten Lösungsmittel, insbesondere einem Halogenalkan, gelöst, wobei in einem zweiten Verfahrensschritt ein inertes Lösungsmittel mit dem Katalysator gemischt wird. Nach der Kombination der Lewissäuren oder der Metallseifen höherer Fettsäuren mit dem inerten Lösungsmittel wird die so entstandene Lösung mit einem Acetylierungsmittel vermischt, bevor in einem folgenden Verfahrensschritt die Lösung aus dem arsenorganischen Kampfstoff und dem inerten Lösungsmittel hinzugefügt wird.

Der vorliegenden Erfindung liegt daher die Aufgabe zu Grunde, den geschilderten Nachteilen abzuhelfen und eine gegenüber üblichen chemischen Kampfstoffen hoch wirksame, insbesondere sehr schnell reagierende Entgiftungslösung bereit zu stellen, die in der Lage ist, die den Kampfstoffen häufig beigemengten Verdickungsmittel aufzulösen.

Weiterhin erstreckt sich die vorliegende Erfindung auf ein Verfahren zur Herstellung der erfindungsgemäßen Entgiftungslösung, auf ein weiteres Verfahren zur Anwendung der erfindungsgemäßen Entgiftungslösung sowie auf die Verwendung der erfindungsgemäßen Entgiftungslösung zur Dekontamination von verseuchten Oberflächen.

Demgemäß wurde eine neue Entgiftungslösung gefunden, welche auf Basis folgender Substanzen wirksam ist:

0,1 bis 50 Gewichtsteile mindestens eines Friedel-Crafts Reagens (Lewis-Säuren) (I), 0,5 bis 80 Gewichtsteile eines oder mehrerer der folgenden, speziellen Lösungsmittel (II) : Dimethylsulfoxid, 1,3 - Dimethyl-2-imidazolidinon oder Octamethylcyclotetrasiloxan sowie 1 bis 80 Gewichtsteile eines alkoholischen Lösungsmittels (III), wobei sich die Bezeichnung Gewichtsteile jeweils auf 100 Gewichtsteile der gesamten Entgiftungslösung bezieht.

Als aktive Komponente enthält die erfindungsgemäße Entgiftungslösung 0,1 bis 50 Gewichtsteile, insbesondere 1 bis 40 Gewichtsteile und besonders bevorzugt 2 bis 35 Gewichtsteile eines oder mehrerer Friedel-Crafts Reagenzien (I). Geeignete Friedel-Crafts Reagenzien sind u.a. Bortrifluorid, Bortrichlorid, Aluminiumtrichlorid, Eisentrichlorid, Eisentribromid und Titantetrachlorid, wobei sich Bortrifluorid und Aluminiumtrichlorid als besonders wirksame Friedel-Crafts Reagenzien erwiesen haben. Diese Reagenzien werden auch als sogenannte Lewissäuren bezeichnet. Es sind handelsübliche Substanzen, welche in der chemischen Industrie im großen Umfang eingesetzt werden.

Weiterhin weist die erfindungsgemäße Entgiftungslösung 0,5 bis 80 Gewichtsteile, insbesondere 5 bis 75 Gewichtsteile und besonders bevorzugt 10 bis 70 Gewichtsteile eines oder mehrerer der speziellen Lösungsmittel (II) auf.

Von diesen speziellen Lösungsmitteln ist 1,3 -Dimethyl-2-imidazolidinon besonders gut geeignet, um die den Kampfstoffen beigemischten Verdickungsmittel oder Haftklebstoffe anzugreifen. Derartige Lösungsmittel (II) sind im Handel käuflich.

Die sehr gute Wirksamkeit der erfindungsgemäßen Entgiftungslösung beruht u.a. auf dem hervorragenden Lösungsvermögen von Dimethylsulfoxid, 1,3-Dimethyl-2-imidazolidinon und Octamethylcyclotetrasiloxan für derartige Verdickungsmittel, die üblicherweise in einer Menge von 1 bis 20 Gew-%, insbesondere in einer Menge von 1 bis 10 Gew.-% den Kampfstoffen beigemengt werden. Derartige Verdickungsmittel sind meistens Copolymerisate auf Basis der Acrylsäure, der Methacrylsäure, sowie deren Ester oder Anhydride, des Styrols, des Butadiens oder des Vinylacetats mit untergeordneten Mengen anderer Comonomerer. Sie werden auch in Form sogenannter Polymerdispersionen vertrieben.

Häufig verwendete Verdickungsmittel sind u.a. Copolymerisate aus Styrol und n-Butylacrylat, Polymere auf Basis von Ethenylbenzol sowie Copolymerisate der Acrylsäure, welche beispielsweise unter der Bezeichnung Acronal® von der BASF Aktiengesellschaft vertrieben werden.

Darüber hinaus sind auch Verdickungsmittel auf Basis von Copolymerisaten der Acrylsäure und von Vinylacetat denkbar. Derartige Verdickungsmittel sind meist wasserunlöslich, so dass damit verdickte chemische und biologische Kampfstoffe mit Entgiftungsmitteln auf Wasserbasis nicht zerstört werden können. Auf Grund ihrer Wasserfreiheit und der sehr guten Lösungseigenschaften der speziellen Lösungsmittel (II) sind die erfindungsgemäßen Entgiftungslösungen in der Lage, die Schutzwirkung derartiger Verdickungsmittel für Kampfmittel wirksam aufzuheben, so dass die aktiven Entgiftungskomponenten den Kampfstoff ungehindert angreifen können.

Darüber hinaus enthält die erfindungsgemäße Entgiftungslösung noch 1 bis 80 Gewichtsteile, insbesondere 5 bis 75 Gewichtsteile und besonders bevorzugt 10 bis 70 Gewichtsteile eines alkoholischen Lösungsmittels (III). Geeignete alkoholische Lösungsmittel (III) sind insbesondere aliphatische Alkohole wie Methanol, Ethanol, 1-Propanol, 2-Propanol, 1-Butanol, 2-Butanol, tert. Butanol, die verschiedenen Alkohole(1-,2-, tert., sek.) des Pentanols, des Hexanols, des Heptanols, sowie des Octanols, des Nonanols sowie des Decanols. Weiterhin eignen sich hierfür von Aromaten abgeleitete Alkohole wie Benzylalkohol sowie Alkohole welche noch Heteroatome im Molekül aufweisen, beispielsweise Thiodiethanol oder Diethylsulfid. Besonders gut geeignete alkoholische Lösungsmittel (III) sind u.a. 2-Propanol, 1-Heptanol, Benzylalkohol sowie Thiodiethanol. Die hier beschriebenen Alkohole (III) können im Handel erworben werden.

Die für die Komponenten (I), (II) und (III) der erfindungsgemäßen Entgiftungslösung angegebenen Gewichtsteile beziehen sich jeweils auf 100 Gewichtsteile der gesamten Entgiftungslösung.

Um eine korrosive Wirkung der erfindungsgemäßen Entgiftungslösung zu vermeiden, kann es sich empfehlen, zusätzlich zu den Komponenten (I), (II) und (III) noch 0,1 bis 5 Gewichtsteile, insbesondere 0,2 bis 3 Gewichtsteile und besonders bevorzugt 0,5 bis 2 Gewichtsteile, jeweils bezogen auf 100 Gewichtsteile der gesamten Entgiftungslösung, 1H-Benzotriazol als Inhibitor zu verwenden. Diese Substanz ist im Fachhandel zugänglich.

Darüber hinaus kann der erfindungsgemäßen Entgiftungslösung noch 0,25 bis 25 Gewichtsteile, insbesondere noch 0,5 bis 20 Gewichtsteile und besonders bevorzugt 1 bis 20 Gewichtsteile, jeweils bezogen auf 100 Gewichtsteile der fertigen Entgiftungslösung, eines 10 bis 16 Kohlenstoffatome aufweisenden gesättigten alicyclischen Kohlenwasserstoffs als Deckschichtbildner hinzugefügt werden. Dabei bildet ein derartiger alicyclischer Kohlenwasserstoff nach dem Aufbringen der Entgiftungslösung auf eine mit chemischen oder biologischen Kampfstoffen verunreinigte Oberfläche eine Deckschicht, welche die sich darunter befindlichen Giftstoffe abdeckt und so verhindert, das diese sich verflüchtigen, noch bevor die aktive Dekontaminationskomponente (I) die Giftstoffe zerstört. Je nach der vorliegenden Außentemperatur verflüchtigen sich die gebildeten Deckschichten nach einiger Zeit von selbst und hinterlassen dann eine entgiftete Oberfläche.

Geeignete Deckschichtbildner sind insbesondere gesättigte alicyclische Kohlenwasserstoffe mit 10 bis 16 Kohlenstoffatomen, vorzugsweise mit 11 bis 15 Kohlenstoffatomen. Ein besonders gut geeigneter Deckschichtbildner ist Cyclododekan mit der allgemeinen Summenformel C12H24. Derartige alicyclische Kohlenwasserstoffe können über den chemischen Handel bezogen werden. Sie sind in unpolaren Lösungsmitteln gut und in polaren Lösungsmitteln nicht löslich. Der dichte Film, der nach dem Aufbringen der Entgiftungslösung auf die kontaminierte Oberfläche durch derartige Deckschichtbildner entsteht, ist wasserdicht und bildet so einen sehr wirksamen Schutz gegen das Verdunsten der Giftstoffe.

Die erfindungsgemäße Entgiftungslösung eignet sich insbesondere zur Beseitigung von den als chemische Kampfstoffe eingesetzten Nervengasen wie u.a. Ethyl N,N-dimethylphosphoramidocyanide (Tabun; Bezeichnung: GA), Isopropyl methyl phosphoro-fluoridate (Sarin; Bezeichnung: GB), Pinacolyl methyl phosphorofluoridate (Soman; Bezeichnung: GD) und O-Ethyl-S-(2-(düsopropylamino)-ethyl)methylthiophosphonat (V-agent, Bezeichnung: VX). Weiterhin ist die erfindungsgemäße Entgiftungslösung u.a. wirksam gegenüber einem blasenziehenden Hautkampfstoff wie Dichlordiethylsulfid (S-Mustard oder Senfgas; Bezeichnung: HD), sowie gegenüber N-Mustard, Phosgen, Dimethyldichlorvinyl-phosphat oder gegenüber Tetraethylpyrophosphat. Die mit Verdickungsmitteln versetzten Kampfstoffe werden zusätzlich mit dem Vorsatz T ("thickening") bezeichnet, also beispielsweise THD.

Die hohe Effektivität der hier beschriebenen Kampfstoffe auf Basis von organischen Phoshorverbindungen beruht u.a auf ihrer Fähigkeit, im menschlichen Körper das Enzym Cholinesterase wirksam zu blockieren oder zu zerstören. Cholinesterase ist eine wesentliche Substanz bei der Weiterleitung von Impulsen des Nervensystems.

Ein wesentlicher Vorteil der erfindungsgemäßen Entgiftungslösung ist u.a. darin zu sehen, dass diese nach der üblichen Einwirkungszeit nicht abgewaschen werden muß, sondern sich von selbst verflüchtigt, gegebenenfalls unter Zuhilfenahme eines Gebläses.

Ein wichtiges Merkmal der erfindungsgemäßen Entgiftungslösungen besteht darin, dass die vorhandenen Friedel-Crafts Reagenzien (I) als Katalysatoren einer Reaktion dienen, bei welcher letztlich die in den Kampfstoffmolekülen vorliegenden Halogenatome vom Molekül abgespalten werden. Dabei kommt es zu einer Verbindung der stark elektrophilen Friedel-Crafts Reagenzien an ein im Kampfstoffmolekül vorliegendes Halogenatom und dessen Abspaltung von diesem Molekül infolge eines Bindungsbruchs zwischen dem Halogenatom und dem benachbarten Kohlenstoffatom.

Darüber hinaus sind auch die als spezielle Lösungsmittel (II) verwendeten Substanzen in der Lage, als aktive nukleophile Komponenten die in den Kampfstoffen ebenfalls vorliegenden Schwefel- und Phosphorgruppen wirksam angreifen zu können.

So reagiert beispielsweise das als Lösungsmittel (II) verwendete Dimethylsulfoxid in seiner polarisierten Form in einer sogenannten S_{N}2-Reaktion (nukleophile Substitution) mit dem Chlor in Dichlordiethylsulfid (S-Mustard) unter Abspaltung eines Chlorids, wodurch die Molekülstruktur des Dichlordiethylsulfids zerstört wird.

Dimethylsulfoxid selbst ist ein nukleophiles aprotisches Lösungsmittel, welches auch gut Polymere auflöst und daher in besonderer Weise für die Entgiftung von verdickten Kampfstoffen geeignet ist.

Das ebenfalls gut als spezielles Lösungsmittel (II) geeignete 1,3 - Dimethyl-2-imidazolidinon ist ebenfalls ein sehr reaktives Solvens, welches als aprotisch polares Lösungsmittel bei nukleophilen Substitutionsreaktionen wirksam ist.

Die gleiche nukleophile Kraft hat der Schwefel auch im ebenfalls als Komponente (III) der erfindungsgemäßen Entgiftungslösung verwendeten Thiodiethanol mit der Summenformel: HO-CH2-CH2-S-CH2-CH2-OH.

Die erfindungsgemäßen Entgiftungslösungen eignen sich auch zur Zerstörung biologischer Kampfstoffe, welche ebenfalls für den Menschen bereits in sehr kleinen Mengen tödlich wirken können. Zu den biologischen Kampfstoffen zählen im wesentlichen Bakterien, Viren und Toxine. Beispiele hierfür sind u.a. Ricin, das hochgiftige Protein aus Ricinussamen, Botulismustoxin, welches bei Lebensmittelvergiftungen auftritt, Enterotoxine, die auf Verdauungsorgane und das Nervensystem wirken, Melioidose-Erreger (Pseudom. pseudomallei), Q-Fieber (weltweit bei Haustieren verbreitet), Malta-Fieber (Brucellose durch brucella von Tieren), Tularämie (typhusähnliche fieberhafte Erkrankung), Anthrax (Milzbrand, welches von Tieren auf Menschen übertragen wird), Pneunomie (Lungenpest, hervorgerufen durch Yersinia pestis), Pockenviren, Ebolaviren sowie Enzephalitis (eine Erkrankung des zentralen Nervensystems).

Die erfindungsgemäßen Entgiftungslösungen sind dabei in der Lage, Polypeptide und Proteine der Viren und Bakterien wirksam zu denaturieren und dadurch zu zerstören.

Dies gilt auch für die Struktur von Toxinen und Nukleinsäuresequenzen, welche ebenfalls chemische Gruppen aufweisen, die von den erfindungsgemäßen Entgiftungslösungen angegriffen werden können. Hierbei wird die sognannte toxophore Guppe zerstört, wodurch ihre Giftwirkung beseitigt wird. Dies kann unter anderem durch eine hydrolytische Spaltung einer Esterbindung, durch Spaltung einer Amidgruppe, oder durch Angriff auf eine SH-Gruppe in diesen Molekülen erfolgen. Ein besonderer Vorteil der erfindungsgemäßen Entgiftungslösungen besteht auch darin, dass sie wasserfrei sind und Alkohole enthalten, was zur Folge hat, dass biologische Erreger der genannten Arten darin nicht existieren können und somit rasch abgetötet werden.

Das ebenfalls erfindungsgemäße Verfahren zur Herstellung der Entgiftungslösungen ist **dadurch gekennzeichnet, dass** das oder die Friedel-Crafts Reagenzien Lewis-Säuren (I) mit den speziellen Lösungsmitteln (II) und den alkoholischen Lösungsmitteln (III) sowie gegebenenfalls mit 1H-Benzotriazol und gegebenenfalls dem gesättigten, alicyclischen Kohlenwasserstoff bei Temperaturen von 10 °C bis 60 °C, insbesondere bei Temperaturen von 30 °C bis 60 °C und vorzugsweise von 40 °C bis 50 °C miteinander vermischt werden. Dabei kann es sich empfehlen, geeignete Mischungsapparaturen wie beispielsweise Rührer, Rückflusskühler etc., zu verwenden.

Die erfindungsgemäßen Entgiftungslösungen zur Dekontamination von mit chemischen und/oder biologischen Kampfstoffen vergifteten Oberflächen werden vorzugsweise in der Weise eingesetzt, dass diese im Sprühverfahren mit Hilfe geeigneter Sprühapparaturen auf die kontaminierte Oberfläche appliziert werden. Es ist auch möglich, die erfindungsgemäße Entgiftungslösung durch Walzen, Wischer oder Tücher auf die kontaminierte Oberfläche aufzubringen, wobei jedoch in diesem Fall dafür Sorge getragen werden sollte, dass die Personen, welche für die Applikation der Entgiftungslösungen verantwortlich sind, durch eine entsprechende Kleidung und entsprechende Vorrichtungen geschützt sind.

Die erfindungsgemäßen Entgiftungslösungen lassen sich zur Dekontamination aller Arten von Oberflächen einsetzen, beispielsweise Oberflächen von Kleidungstücken, Böden, Wänden, Geräten und Fahrzeugen. Sie eignen sich zur raschen und wirksamen Entgiftung aller Arten von chemischen und biologischen Kampfstoffen.

Ein weiterer Vorteil der erfindungsgemäßen Entgiftungslösungen ist darin zu sehen, dass sie die in diesen Kampfstoffen häufig mitverwendeten Verdickungsmittel nicht nur auflösen, sondern auch dafür sorgen, dass diese sehr rasch ihre Klebstoffeigenschaften verlieren. Auf diese Weise ist es möglich, die freigelegten Kampfstoffe sehr rasch zu zerstören, wobei die Entgiftungszeit - verglichen mit anderen Dekontaminationsmitteln - in Folge des Vorliegens von Friedel-Crafts Reagenzien deutlich verringert wird, da diese u.a. die Abspaltung von Halogenen stark beschleunigen können.

Die erfindungsgemäßen Entgiftungslösungen werden in den nachfolgend beschriebenen Beispielen näher erläutert.

### Beispiele

### Beispiel 1:

14 g Bortrifluorid, käuflich als 10 %-ige Lösung in Methanol, Ethanol und/oder Butanol, werden mit Hilfe eines Magnetrühres bei einer Temperatur von 30 °C etwa 60 Minuten lang mit 190 g Octamethylcyclotetrasiloxan sowie mit 47 g Cyclododecan und 35 g 2-Propanol vermengt. Die anschließend erhaltene erfindungsgemäße Entgiftungslösung ist über Monate hinweg gut lagerbar.

### Beispiel 2:

62g wasserfreies Aluminiumtrichlorid werden mit Hilfe eines Magnetrührers und Rückflusskühlers bei einer Temperatur von 50 °C etwa 60 Minuten lang mit 500 g Ethanol, 143 g 1,3-Dimethyl-2-imidazolidinon und 20 g 1-Heptanol vermengt. Die so erhaltene erfindungsgemäße Entgiftungslösung ist über Monate hinweg gut lagerbar.

Wirksamkeit der erfindungsgemäßen Entgiftungslösungen gegen chemische Kampfstoffe:

Die Wirksamkeit der in den Beispielen 1 und 2 hergestellten Entgiftungslösungen wurde gegenüber Senfgas (HD) sowie gegenüber mit Verdickungsmitteln versetztem Senfgas (THD) nach folgender Methode getestet :

Der Kampfstoff wurde als Tröpfchen sowohl in unverdickter, als auch in verdickter Form auf einen CARC-Teststreifen (Chemical Agent Resistant Coating) aufgetragen und darauf die Entgiftungslösung bis zur vollständigen Bedeckung aufgebracht. Nach 30 Minuten in horizontaler Lage wurde die Substanz aus Giftstoff und Entgiftungslösung abgegossen und jeder Teststreifen gründlich mit einer bestimmten Menge Wasser gespült. Anschließend wurde die als Rückstand verbliebene Oberflächenkontamination, und damit die Wirksamkeit der Dekontamination, nach STANAG - 4360 bestimmt durch Extraktion des Giftstoffes aus dem CARC-Teststreifen mit einem organischen Lösungsmittel und Analyse der resultierenden Lösungsmittelmischung mittels Gaschromatographie/Flammphotometrie.

Das im Beispiel 1 hergestellte Entgiftungsmittel zerstörte innerhalb von 30 Minuten 95,9 % HD und 95,1 % THD, das Entgiftungsmittel des Beispiels 2 zerstörte innerhalb von 30 Minuten 97,5 % HD und 96,9 % THD.

## Patentansprüche

1. Entgiftungslösung, enthaltend
0,1 bis 50 Gewichtsteile mindestens eines Friedel-Crafts Reagens (Lewis-Säuren) (I),
0,5 bis 80 Gewichtsteile eines oder mehrerer der folgenden, speziellen Lösungsmittel (II) : Dimethylsulfoxid, 1,3 - Dimethyl-2-imidazolidinon oder Octamethylcyclotetrasiloxan, sowie
1 bis 80 Gewichtsteile eines alkoholischen Lösungsmittels (III),
wobei sich die Bezeichnung Gewichtsteile jeweils auf 100 Gewichtsteile der gesamten Entgiftungslösung bezieht.

2. Entgiftungslösung nach Anspruch 1, wobei diese zusätzlich noch 0,1 bis 5 Gewichtsteile, bezogen auf 100 Gewichtsteile der gesamten Entgiftungslösung, 1H-Benzotriazol enthält.

3. Entgiftungslösung nach einem der Ansprüche 1 oder 2, wobei diese zusätzlich noch 0,25 bis 25 Gewichtsteile, bezogen auf 100 Gewichtsteile der gesamten Entgiftungslösung, eines 10 bis 16 Kohlenstoffatome aufweisenden, gesättigten alicyclischen Kohlenwasserstoffs enthält.

4. Entgiftungslösung nach einem der Ansprüche 1 bis 3, wobei der Anteil des oder der Friedel-Crafts Reagenzien an der gesamten Entgiftungslösung 1 bis 40 Gewichtsteile beträgt.

5. Entgiftungslösung nach einem der Ansprüche 1 bis 4, wobei der Anteil des oder der speziellen Lösungsmittel (II) an der gesamten Entgiftungslösung 5 bis 75 Gewichtsteile beträgt.

6. Entgiftungslösung nach einem der Ansprüche 1 bis 5, wobei der Anteil des oder der alkoholischen Lösungsmittel (III) an der gesamten Entgiftungslösung 5 bis 75 Gewichtsprozente beträgt.

7. Entgiftungslösung nach einem der Ansprüche 2 bis 6, wobei der Anteil des 1H-Benzotriazols an der gesamten Entgiftungslösung 0,5 bis 2 Gewichtsteile beträgt.

8. Entgiftungslösung nach einem der Ansprüche 3 bis 7, wobei der Anteil der 10 bis 16 Kohlenstoffatome aufweisenden, gesättigten alicyclischen Kohlenwasserstoffe an der gesamten Entgiftungslösung 1 bis 20 Gewichtsteile beträgt.

9. Entgiftungslösung nach einem der Ansprüche 3 bis 8, wobei als gesättigter alicyclischer Kohlenwasserstoff Cyclododecan verwendet wird.

10. Verfahren zur Herstellung einer Entgiftungslösung gemäß einem der Ansprüche 1 bis 9,
**dadurch gekennzeichnet, dass**
das oder die Friedel-Crafts Reagenzien (I) mit den speziellen Lösungsmitteln (II) und den alkoholischen Lösungsmitteln (III) sowie gegebenenfalls mit 1H-Benzotriazol und gegebenenfalls mit dem gesättigten alicyclischen Kohlenwasserstoff bei Temperaturen von 10°C bis 50 °C miteinander vermischt werden.

11. Verfahren zur Entgiftung von mit chemischen und/oder biologischen Kampfstoffen kontaminierten Oberflächen,
**dadurch gekennzeichnet, dass**
eine Entgiftungslösung gemäß einem der Ansprüche 1 bis 9 im Sprühverfahren auf die kontaminierten Oberflächen aufgetragen wird.

12. Verwendung der Entgiftungslösungen gemäß einem der Ansprüche 1 bis 9 zur Dekontaminierung von mit chemischen und/oder biologischen Kampfstoffen verseuchten Oberflächen.

## Claims

1. Decontamination solution containing
0.1 to 50 parts by weight of at least one Friedel Crafts reagent (Lewis acids) (I),
0.5 to 80 parts by weight of one or more of the following special solvents (II): dimethyl sulphoxide, 1,3 - dimethyl-2-imidazolidinone or octamethylcyclotetrasiloxane, and
1 to 80 parts by weight of an alcoholic solvent (III),
whereby the parts by weight designation refers in each case to 100 parts by weight of the entire decontamination solution.

2. Decontamination solution in accordance with claim 1, whereby it contains additionally 0.1 to 5 parts by weight, referring to 100 parts by weight of the entire decontamination solution, of 1H-benzotriazol.

3. Decontamination solution in accordance with one of claims 1 or 2, whereby it contains additionally 0.25 to 25 parts by weight, referring to 100 parts by weight of the entire decontamination solution, of a saturated alicyclic hydrocarbon of 10 to 16 carbon atoms.

4. Decontamination solution in accordance with one of claims 1 to 3, whereby the proportion of the Friedel Crafts reagent(s) to the entire decontamination solution is 1 to 40 parts by weight.

5. Decontamination solution in accordance with one of claims 1 to 4, whereby the proportion of the special solvent(s) (II) to the entire decontamination solution is 5 to 75 parts by weight.

6. Decontamination solution in accordance with one of claims 1 to 5, whereby the proportion of the alcoholic solvent(s) (III) to the entire decontamination solution is 5 to 75 percent by weight.

7. Decontamination solution in accordance with one of claims 2 to 6, whereby the proportion of the 1H-benzotriazol to the entire decontamination solution is 0.5 to 2 parts by weight.

8. Decontamination solution in accordance with one of claims 3 to 7, whereby the proportion of the saturated alicyclic hydrocarbon of 10 to 16 carbon atoms to the entire decontamination solution is 1 to 20 parts by weight.

9. Decontamination solution in accordance with one of claims 3 to 8, whereby cyclododecane is used as the saturated alicyclic hydrocarbon.

10. Process to manufacture a decontamination solution in accordance with one of claims 1 to 9, **characterised in that** the Friedel Crafts reagent(s) (I) is/are mixed at temperatures from 10°C to 50°C with the special solvents (II) and the alcoholic solvents (III) and, if applicable, with the 1H benzotriazol and, if applicable, with the saturated alicyclic hydrocarbon.

11. Process to decontaminate surfaces contaminated with chemical and/or biological weapons, **characterised in that** a decontamination solution in accordance with one of the claims 1 to 9 is applied by spraying on to the contaminated surfaces.

12. Use of decontaminating solutions in accordance with one of the claims 1 to 9 for the decontamination of surfaces contaminated with chemical and/or biological weapons.

## Revendications

1. Solution de décontamination, contenant
0,1 à 50 parties en poids d'au moins un réactif de Friedel-Craft (acides de Lewis) (I),
0,5 à 80 parties en poids d'un ou plusieurs des solvants particuliers suivants (II) : le sulfoxyde de diméthyle, la 1,3-diméthyl-2-imidazolidinone ou l'octaméthyl-cyclotétrasiloxane, ainsi que
1 à 80 parties en poids d'un solvant alcoolique (III),
la désignation de parties en poids se référant à chaque fois à 100 parties en poids de la solution de décontamination totale.

2. Solution de décontamination selon la revendication 1, dans laquelle celle-ci contient en outre encore 0,1 à 5 parties en poids de 1H-benzotriazole, par rapport à 100 parties en poids de la solution de décontamination totale.

3. Solution de décontamination selon l'une des revendications 1 ou 2, dans laquelle celle-ci contient en outre encore 0,25 à 25 parties en poids d'un hydrocarbure alicyclique saturé, ayant de 10 à 16 atomes de carbone, par rapport à 100 parties en poids de la solution de décontamination totale.

4. Solution de décontamination selon l'une des revendications 1 à 3, dans laquelle la proportion du ou des réactifs de Friedel-Crafts de la solution de décontamination totale est de 1 à 40 parties en poids.

5. Solution de décontamination selon l'une des revendications 1 à 4, dans laquelle la proportion du ou des solvants particuliers (II) de la solution de décontamination totale est de 5 à 75 parties en poids.

6. Solution de décontamination selon l'une des revendications 1 à 5, dans laquelle la proportion du ou des solvants alcooliques (III) de la solution de décontamination totale est de 5 à 75 pourcent en poids.

7. Solution de décontamination selon l'une des revendications 2 à 6, dans laquelle la proportion du 1H-benzotriazole de la solution de décontamination totale est de 0,5 à 2 parties en poids.

8. Solution de décontamination selon l'une des revendications 3 à 7, dans laquelle la proportion des hydrocarbures alicycliques saturés, ayant de 10 à 16 atomes de carbone, de la solution de décontamination totale, est de 1 à 20 parties en poids.

9. Solution de décontamination selon l'une des revendications 3 à 8, dans laquelle le cyclododécane est employé comme hydrocarbure alicyclique saturé.

10. Procédé pour préparer une solution de décontamination selon l'une des revendications 1 à 9,
**caractérisé en ce que** le ou les réactifs de Friedel-Crafts (1) avec les solvants particuliers (II) et les solvants alcooliques (III) ainsi qu'éventuellement avec le 1H-benzotriazole et éventuellement avec l'hydrocarbure alicyclique saturé sont mélangés entre eux à des températures de 10°C à 50°C.

11. Procédé pour la décontamination de surfaces contaminées par des agents de combat chimiques et/ou biologique,
**caractérisé en ce qu'**une solution de décontamination selon l'une des revendications 1 à 9 est appliquée sur les surfaces contaminées dans un procédé de pulvérisation.

12. Utilisation des solutions de décontamination selon l'une des revendications 1 à 9 pour décontaminer des surfaces polluées par des agents de combat chimiques et/ou biologiques.
